# EUROPEAN PATENT APPLICATION

(11) **EP 1 493 633 A1**
(43) Date of publication of application: **05.01.2005**
(21) Application number: 03029032.4
(22) Date of filing: 16.12.2003
(51) Int. Cl.: B60R 21/01

(54) **An airbag system for a vehicle**

(30) Priority: 04.07.2003 KR 2003045289
(71) Applicant: HYUNDAI MOTOR COMPANY, Seoul (KR)
(72) Inventor: Shin, Kwang Cheol, Hwaseong-city Gyunggi-do (KR)
(74) Representative: Viering, Jentschura & Partner

(57) **Abstract**

An airbag system is provided which comprises a driver airbag module (13), a passenger airbag module (15), a driver seat belt sensor (27), a passenger occupation detection unit (35), a driver seat belt warning device (37), a passenger seat belt warning system (39), a first control unit (17), and a second control unit (43). The first control unit (17) controls the driver airbag module (13) and the passenger airbag module (15), and it is configured to receive information on whether the driver seat belt (29) is latched, information on whether the passenger seat is occupied by the passenger, and information on whether the passenger seat belt is latched. The first control unit (17) generates a belt condition signal based on the received information. The second control unit (43) receives the belt condition signal from the first control unit (17), and it controls operations of the driver seat belt warning device (37) and the passenger seat belt warning device (39), based on the belt condition signal.

## Description

### FIELD OF THE INVENTION

The present invention relates to an airbag system for a vehicle, and more particularly, to an airbag system having a seat belt warning function.

### BACKGROUND OF THE INVENTION

A so-called advanced airbag system detects whether a passenger seat is occupied by a passenger and whether a driver seat belt and a passenger seat belt are latched or not, in order to improve protection of a driver and a passenger from damage.

In such an advanced airbag system, when the seat belt is not latched, an airbag control unit sends a corresponding signal to a body control unit. Then, the body control unit controls a warning lamp and a warning buzzer to operate.

The conventional advanced airbag system includes a driver seat belt warning lamp, and a passenger seat belt warning lamp.

Operations of the driver seat belt warning lamp and the passenger seat belt warning lamp are controlled by the body control unit. The body control unit is separate from the airbag control unit.

In order to control the operations of the driver seat belt warning lamp and the passenger seat belt warning lamp, the body control unit must receive signals indicative of information on whether the driver seat belt and the passenger seat belt are latched.

The body control unit receives a signal, which represents information on whether the passenger seat belt is latched, from the airbag control unit. That is, the airbag control unit receives a signal that represents whether the passenger seat belt is latched from a passenger seat belt sensor, and it outputs a corresponding signal to the body control unit. The signal outputted to the body control unit from the airbag control unit is an on/off signal according to the state of the passenger seat belt. Therefore, even when a line connecting the airbag control unit and the body control unit is disconnected or is shorted, the body control unit does not detect that there are such errors.

Furthermore, the body control unit cannot use a signal of a driver seat belt sensor that is connected to the airbag control unit, because of a signal inadequacy. Therefore, the body control unit receives a signal that indicates whether the driver seat belt is latched from a separate driver seat belt buckle switch.

The information disclosed in this Background of the Invention section is only for enhancement of understanding of the background of the invention and should not be taken as an acknowledgement or any form of suggestion that this information forms the prior art that is already known to a person skilled in the art.

### SUMMARY OF THE INVENTION

Embodiments of the present invention provide an airbag system in which an airbag control unit generates a pulse width modulation signal based on a signal of a driver seat belt sensor, a signal of a passenger seat belt sensor, and a signal of a passenger occupation detection unit, and a body control unit receives the pulse width modulation signal from the airbag control unit and controls a driver seat belt warning lamp and a passenger seat belt warning lamp using the pulse width modulation signal, so that the airbag system can effectively deal with errors and can operate without a separate driver seat belt buckle switch that detects whether a driver seat belt is latched.

In a preferred embodiment of the present invention, an airbag system comprises a driver airbag module, a passenger airbag module, a driver seat belt sensor, a passenger occupation detection unit, a driver seat belt warning device, a passenger seat belt warning system, a first control unit, and a second control unit. The driver seat belt sensor detects whether a driver seat belt is latched or not. The passenger seat belt sensor detects whether a passenger seat belt is latched or not. The passenger occupation detection unit detects whether a passenger seat is occupied by a passenger or not. The driver seat belt warning device warns of an unlatched state of the driver seat belt. The passenger seat belt warning device warns of an unlatched state of the passenger seat belt. The first control unit controlling the driver airbag module and the passenger airbag module, and it is configured to receive information on whether the driver seat belt is latched, information on whether the passenger seat is occupied by the passenger, and information on whether the passenger seat belt is latched. The first control unit generates a belt condition signal based on the received information. The second control unit receives the belt condition signal from the first control unit, and it controls operations of the driver seat belt warning device and the passenger seat belt warning device, based on the belt condition signal.

It is preferable that the belt condition signal generated by the first control unit is a pulse width modulation signal.

It is further preferable that a duty ratio of the pulse width modulation signal varies according to the information on whether the driver seat belt is latched, the information on whether the passenger seat is occupied by the passenger, and the information on whether the passenger seat belt is latched.

It is still further preferable that the duty ratio of the pulse width modulation signal generated by the first control unit is one of first, second, third, and fourth predetermined duty ratios. The duty ratio of the pulse width modulation signal is the first predetermined duty ratio if the driver seat belt is latched, and if the passenger seat is not occupied by the passenger or the passenger seat belt is latched. The duty ratio of the pulse width modulation signal is the second predetermined duty ratio if the driver seat belt is unlatched, and if the passenger seat is not occupied by the passenger or the passenger seat belt is latched. The duty ratio of the pulse width modulation signal is the third predetermined duty ratio if the drive seat belt is latched, and if the passenger seat is occupied by the passenger and the passenger seat belt is unlatched. The duty ratio of the pulse width modulation signal is the fourth predetermined duty ratio if the drive seat belt is unlatched, and if the passenger seat is occupied by the passenger and the passenger seat belt is unlatched.

Preferably, if the duty ratio of the pulse width modulation signal generated by the first control unit is the first predetermined duty ratio, the second control unit controls both of the driver seat belt warning device and the passenger seat belt warning device to not operate.

Preferably, if the duty ratio of the pulse width modulation signal generated by the first control unit is the second predetermined duty ratio, the second control unit controls the driver seat belt warning device to operate and the passenger seat belt warning device to not operate.

Preferably, if the duty ratio of the pulse width modulation signal generated by the first control unit is the third predetermined duty ratio, the second control unit controls the driver seat belt warning device to not operate and the passenger seat belt warning device to operate.

Preferably, if the duty ratio of the pulse width modulation signal generated by the first control unit is the fourth predetermined duty ratio, the second control unit controls both of the driver seat belt warning device and the passenger seat belt warning device to operate.

It is preferable that the airbag system further comprises a seat belt warning buzzer that is controlled by the second control unit according to the belt condition signal.

It is also preferable that each of the driver seat belt warning device and the passenger seat belt warning device is a warning lamp.

### BRIEF DESCRIPTION OF THE DRAWINGS

The accompanying drawings, which are incorporated in and constitute a part of the specification, illustrate an embodiment of the invention, and, together with the description, serve to explain the principles of the invention, where:
FIG. 1 is a schematic diagram of the airbag system according to the preferred embodiment of the present invention; and
FIG. 2 shows PWM signals generated by an airbag control unit of the airbag system of FIG. 1.

### DETAILED DESCRIPTION OF THE PREFERRED EMBODIMENTS

Hereinafter, a preferred embodiment of the present invention will be described in detail with reference to the accompanying drawings.

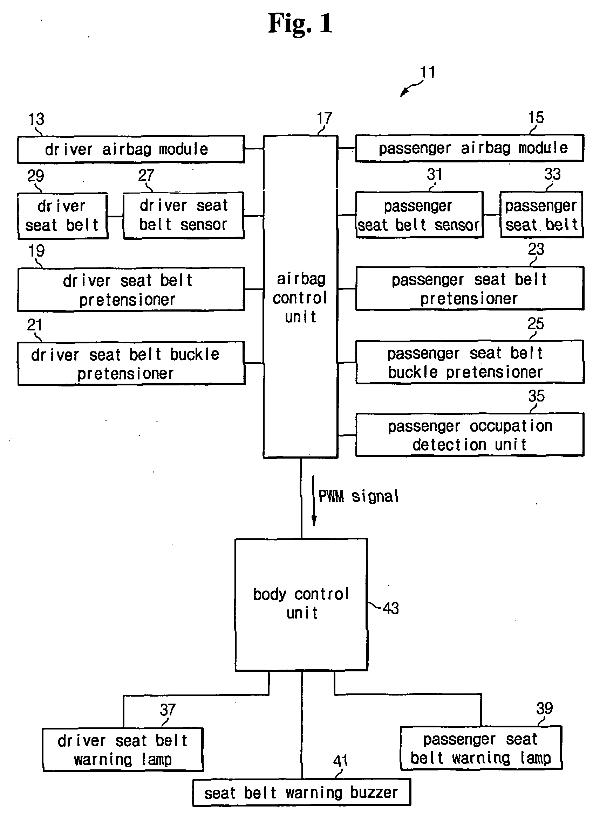

As shown in FIG. 1, an airbag system 11 according to the preferred embodiment of the present invention includes a driver airbag module 13 that is disposed in front of a driver seat of a vehicle, a passenger airbag module 15 that is disposed in front of a passenger seat of the vehicle, and an airbag control unit 17 for controlling operations of the driver airbag module 13 and the passenger airbag module 15.

The airbag control unit 17 controls the driver airbag module 13 and the passenger airbag module 15 based on information provided by various sensors (not shown) of the vehicle.

The airbag control unit 17 may comprise a processor and associated hardware as may be selected and programmed by a person of ordinary skill in the art based on the teachings of the present invention.

The airbag system 11 according to the preferred embodiment of the present invention further includes a driver seat belt pre-tensioner 19, a driver seat belt buckle pre-tensioner 21, a passenger seat belt pre-tensioner 23, and a passenger seat belt buckle pre-tensioner 25. Pre-tensioners are devices for protecting seat occupants more safely when airbags are deployed.

A driver seat belt sensor 27 detects whether a driver seat belt 29 is latched or not, and outputs a corresponding signal to the airbag control unit 17.

A passenger seat belt sensor 31 detects whether a passenger sear belt 33 is latched or not, and outputs a corresponding signal to the airbag control unit 17.

The driver seat belt 27 and the passenger seat belt sensor 31 can be a hall sensor that is disposed inside a buckle of a seat belt. The hall sensor, which is well known in the art, detects whether the seat belt buckle is coupled or not using a hall effect of a hall IC.

A passenger occupation detection unit 35 detects whether a passenger seat is occupied by a passenger, and outputs a corresponding signal to the airbag control unit 17.

The passenger occupation detection unit 35 may include a pressure sensor (not shown) that is disposed inside the passenger seat. Such passenger occupation detection system is well known in the art.

The airbag control unit 17 can obtain information on whether the driver seat belt 29 is latched, whether the passenger seat is occupied by a passenger, and whether the passenger seat belt 33 is latched, based on signals input from the driver seat belt sensor 27, the passenger seat belt sensor 31, and the passenger occupation detection unit 35.

The airbag control unit 17 generates a seat belt condition signal based on the information on whether the driver seat belt 29 is latched, whether the passenger seat is occupied by a passenger, and whether the passenger seat belt 33 is latched.

In the airbag system 11 according to the preferred embodiment of the present invention, the seat belt condition signal generated by the airbag control unit 17 is a pulse width modulation (PWM) signal.

A pulse width modulation is one of methods for encoding an analog signal into a digital signal. PWM signal includes a series of square waves having a specific duty ratio (%). The duty ratio of the PWM signal is a ratio of on-time with respect to a period of the signal.

Therefore, the airbag control unit 17 includes a PWM signal generating circuit. The PWM signal generating circuit is well known in the art.

The airbag control unit 17 regulates the duty ratio of the PWM signal, based on information on whether the driver seat belt 29 is latched, whether the passenger seat is occupied by a passenger, and whether the passenger seat belt 33 is latched.

The airbag system 11 according to the preferred embodiment of the present invention further includes a driver seat belt warning lamp 37 and a passenger seat belt warning lamp 39.

The driver seat belt warning lamp 37 is a device for warning a driver of an unlatched state of the driver seat belt 29, and the passenger seat belt warning lamp 39 is a device for warning a passenger or a driver of an unlatched state of the passenger seat belt 33 when the passenger seat is occupied by a passenger. Instead of the warning lamps, any warning device such as a speaker outputting audio signals can be used.

Furthermore, the airbag system 11 according to the preferred embodiment of the present invention may further comprise a seat belt warning buzzer 41 for warning a driver of a passenger an unlatched state of the driver seat belt 29 or an unlatched state of the passenger seat belt 33 when the passenger seat is occupied by a passenger.

Operations of the driver seat belt warning lamp 37, the passenger seat belt warning lamp 39, and the seat belt warning buzzer 41 are controlled by a body control unit 43.

The body control unit 43 receives the PWM signal from the airbag control unit 17, and it controls the driver seat belt warning lamp 37, the passenger set belt warning lamp 39, and the seat belt warning buzzer 41, based on the duty ratio of the received PWM signal.

The body control unit 43 may comprise a processor and associated hardware as may be selected and programmed by a person of ordinary skill in the art based on the teachings of the present invention.

Operations of the driver seat belt warning lamp 37, the passenger seat belt warning lamp 39, and the seat belt warning buzzer 41 are controlled according to the states of the driver seat belt 29 and the passenger seat belt 33 and whether the passenger seat is occupied by a passenger.

The driver seat belt warning lamp 37 is controlled to operate (illuminate) in a case when the driver seat belt 29 is not latched, the passenger seat belt warning lamp 39 is controlled to operate (illuminate) in a case when the passenger seat belt 33 is not latched while the passenger seat is occupied by a passenger, and the seat belt warning buzzer 41 is controlled to operate when at least one of the driver seat belt warning lamp 37 and the passenger seat belt warning lamp 39 is controlled to operate.

If the driver seat belt 29 is latched and if the passenger seat is not occupied by a passenger or the passenger seat belt 33 is latched (case 1), both of the driver seat belt warning lamp 37 and the passenger seat belt warning lamp 39 are controlled to not operate.

If the driver seat belt 29 is unlatched and if the passenger seat is not occupied by a passenger of the passenger seat belt 33 is latched (case 2), the driver seat belt warning lamp 37 is controlled to operate and the passenger seat belt warning lamp 39 is controlled to not operate.

If the driver seat belt 29 is latched and if the passenger seat belt 33 is unlatched while the passenger seat is occupied by a passenger (case 3), the drive seat belt warning lamp 37 is controlled to not operate and the passenger seat belt warning lamp 39 is controlled to operate.

If the driver seat belt 29 is unlatched and if the passenger seat belt 33 is unlatched while the passenger seat is occupied by a passenger (case 4), both of the driver seat belt warning lamp 37 and the passenger seat belt warning lamp 39 are controlled to operate.

Accordingly, the seat belt warning buzzer 41 is controlled to operate in case 2, case 3, and case 4.

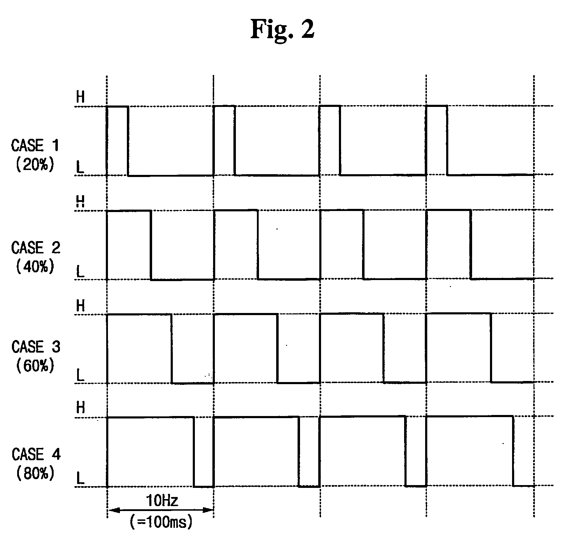

As shown in FIG. 2, the duty ratios (%) of the PWM signals generated by the airbag control unit 17 vary according to case 1, case 2, case 3, and case 4.

For example, the duty ratio of the PWM signal can be 20% for the case 1, 40% for the case 2, 60% for the case 3, and 80% for the case 4.

The body control unit 43 controls the operations of the driver seat belt warning lamp 37, the passenger seat belt warning lamp 39, and the seat belt warning buzzer 41, based on the duty ratio of the PWM signal input from the airbag control unit 17.

For example, if the duty ratio of the PWM signal is 20%, the body control unit 43 controls both of the driver seat belt warning lamp 37 and the passenger seat belt warning lamp 39 to not operate.

If the duty ratio of the PWM signal is 40%, the body control unit 43 controls the driver seat belt warning lamp 37 to operate and the passenger seat belt warning lamp 39 to not operate.

If the duty ratio of the PWM signal is 60%, the body control unit 43 controls the driver seat belt warning lamp 37 to not operate and the passenger seat belt warning lamp 39 to operate.

If the duty ratio of the PWM signal is 80%, the body control unit 43 controls both of the driver seat belt warning lamp 37 and the passenger seat belt warning lamp 39 to not operate.

Accordingly, if the duty ratio of the PWM signal is 40%, 60%, or 80%, the body control unit 43 controls the seat belt warning buzzer 41 to operate.

When the duty ratio of the PWM signal is 100% or 0%, the body control unit 43 determines that there is a disconnection of a line or a ground connection. In this case, the body control unit 43 performs a suitable operation (for example, an output of an error message).

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

According to the embodiment of the present invention, the body control unit can determine whether the driver seat belt is latched or not and whether the passenger seat belt is latched or not, without a driver seat belt switch, using the seat belt condition signal of the airbag control unit.

Furthermore, the airbag control unit generates the PWM signal the duty ratio of which varies according to the states of the driver seat belt and the passenger seat belt, and the body control unit receives the PWM signals, so that the body control unit can easily detects errors of the system.

## Claims

1. An airbag system comprising:
a driver airbag module;
a passenger airbag module;
a driver seat belt sensor detecting whether a driver seat belt is latched or not;
a passenger seat belt sensor detecting whether a passenger seat belt is latched or not;
a passenger occupation detection unit for detecting whether a passenger seat is occupied by a passenger or not;
a driver seat belt warning device for warning of an unlatched state of the driver seat belt;
a passenger seat belt warning device for warning of an unlatched state of the passenger seat belt;
a first control unit controlling the driver airbag module and the passenger airbag module, the first control unit configured to receive information on whether the driver seat belt is latched, information on whether the passenger seat is occupied by the passenger, and information on whether the passenger seat belt is latched, and the first control unit generating a belt condition signal based on the received information; and
a second control unit receiving the belt condition signal from the first control unit, the second control unit controlling operations of the driver seat belt warning device and the passenger seat belt warning device, based on the belt condition signal.

2. The airbag system of claim 1, wherein the belt condition signal generated by the first control unit is a pulse width modulation signal.

3. The airbag system of claim 2, wherein a duty ratio of the pulse width modulation signal varies according to the information on whether the driver seat belt is latched, the information on whether the passenger seat is occupied by the passenger, and the information on whether the passenger seat belt is latched.

4. The airbag system of claim 3, wherein the duty ratio of the pulse width modulation signal generated by the first control unit is one of first, second, third, and fourth predetermined duty ratios, the duty ratio of the pulse width modulation signal being the first predetermined duty ratio if the driver seat belt is latched and if the passenger seat is not occupied by the passenger or the passenger seat belt is latched; the duty ratio of the pulse width modulation signal being the second predetermined duty ratio if the driver seat belt is unlatched and if the passenger seat is not occupied by the passenger or the passenger seat belt is latched; the duty ratio of the pulse width modulation signal being the third predetermined duty ratio if the drive seat belt is latched and if the passenger seat is occupied by the passenger and the passenger seat belt is unlatched; and the duty ratio of the pulse width modulation signal being the fourth predetermined duty ratio if the drive seat belt is unlatched and if the passenger seat is occupied by the passenger and the passenger seat belt is unlatched.

5. The airbag system of claim 4, wherein if the duty ratio of the pulse width modulation signal generated by the first control unit is the first predetermined duty ratio, the second control unit controls both of the driver seat belt warning device and the passenger seat belt warning device to not operate.

6. The airbag system of claim 4, wherein if the duty ratio of the pulse width modulation signal generated by the first control unit is the second predetermined duty ratio, the second control unit controls the driver seat belt warning device to operate and the passenger seat belt warning device to not operate.

7. The airbag system of claim 4, wherein if the duty ratio of the pulse width modulation signal generated by the first control unit is the third predetermined duty ratio, the second control unit controls the driver seat belt warning device to not operate and the passenger seat belt warning device to operate.

8. The airbag system of claim 4, wherein if the duty ratio of the pulse width modulation signal generated by the first control unit is the fourth predetermined duty ratio, the second control unit controls both of the driver seat belt warning device and the passenger seat belt warning device to operate.

9. The airbag system of claim 1, further comprising a seat belt warning buzzer that is controlled by the second control unit according to the belt condition signal.

10. The airbag system of claim 9, wherein the belt condition signal is a pulse width modulation signal.

11. The airbag system of claim 10, wherein the duty ratio of the pulse width modulation signal generated by the first control unit is one of first, second, third, and fourth predetermined duty ratios, the duty ratio of the pulse width modulation signal being the first predetermined duty ratio if the driver seat belt is latched and if the passenger seat is not occupied by the passenger or the passenger seat belt is latched; the duty ratio of the pulse width modulation signal being the second predetermined duty ratio if the driver seat belt is unlatched and if the passenger seat is not occupied by the passenger or the passenger seat belt is latched; the duty ratio of the pulse width modulation signal being the third predetermined duty ratio if the drive seat belt is latched and if the passenger seat is occupied by the passenger and the passenger seat belt is unlatched; and the duty ratio of the pulse width modulation signal being the fourth predetermined duty ratio if the drive seat belt is unlatched and if the passenger seat is occupied by the passenger and the passenger seat belt is unlatched.

12. The airbag system of claim 11, wherein if the duty ratio of the pulse width modulation signal generated by the first control unit is the first predetermined duty ratio, the second control unit controls both of the driver seat belt warning device and the passenger seat belt warning device to not operate.

13. The airbag system of claim 11, wherein if the duty ratio of the pulse width modulation signal generated by the first control unit is the second predetermined duty ratio, the second control unit controls the driver seat belt warning device to operate and the passenger seat belt warning device to not operate.

14. The airbag system of claim 11, wherein if the duty ratio of the pulse width modulation signal generated by the first control unit is the third predetermined duty ratio, the second control unit controls the driver seat belt warning device to not operate and the passenger seat belt warning device to operate.

15. The airbag system of claim 11, wherein if the duty ratio of the pulse width modulation signal generated by the first control unit is the fourth predetermined duty ratio, the second control unit controls both of the driver seat belt warning device and the passenger seat belt warning device to operate.

16. The airbag system of claim 1, wherein each of the driver seat belt warning device and the passenger seat belt warning device is a warning lamp.
